# EUROPEAN PATENT SPECIFICATION

(11) **EP 0 845 212 B1**
(45) Date of publication and mention of the grant of the patent: **23.07.2003**
(21) Application number: 97309643.1
(22) Date of filing: 01.12.1997
(51) Int. Cl.: A21C 3/02

(54) **Apparatus and method for forming a continuous dough strip**
Vorrichtung und Verfahren zum Formen eines kontinuierlichen Teigstreifens
Dispositif et procédé pour le formage d'une bande continue de pâte

(30) Priority: 29.11.1996 JP 33486796
(43) Date of publication of application: 03.06.1998
(73) Proprietor: RHEON AUTOMATIC MACHINERY CO. LTD., Utsunomiya-shi Tochigi-ken (JP)
(72) Inventor: Morikawa, Michio, Utsunomiya-shi, Tochigi-ken (JP)
(74) Representative: Leale, Robin George

(56) References cited:
- EP-A- 0 005 570
- EP-A- 0 285 442
- EP-A- 0 545 725
- EP-A- 0 657 101
- EP-A- 0 783 837
- US-A- 2 687 699

## Description

This invention relates to forming a continuous dough strip for producing food products such as bread, cakes, confectionery or the like.

Dough, as used in known machines for producing bread, confectionery, or the like, often takes the form of a continuous strip. In a process for forming a continuous dough strip and dividing the strip into smaller portions to produce food products, a production lot in one cycle of the process is either a continuous dough strip of a certain length or a number of dough portions produced from a dough mass supplied in one cycle.

At the border between successive supplied dough masses there are various unavoidable losses, for example loss caused by a border of an irregular shape and loss caused by the waiting time for the following dough mass, which cause some disadvantages.

Such problems have led to the use of a method and apparatus exemplified in our Japanese Patent Early-Publication No. 63-245631 (corresponding to U.S. Patents Nos. 4,883,417 and 4,902,524) in which a long dough mass is divided into a plurality of dough portions, which are then caused to overlap and join in series to form a continuous dough strip. A disadvantage of such a method, however, is that the border between successive long dough masses cannot be properly joined, because the border often has a narrow width or an uneven thickness (or both) as compared to the remainder of the dough strip. Thus, the border tends to generate the losses, and this has been a problem in producing a continuous dough strip.

It is thus desirable to provide a process and apparatus which, when forming a continuous dough strip by joining a plurality of dough portions, will smoothly and properly join the dough portions and form a continuous dough strip of a substantially constant width.

US-A-2687699 and EP-A-0005570 both disclose apparatus for dividing a long dough mass into a plurality of dough portions each having a predetermined length and forming a continuous dough strip from the said dough portions, such apparatus comprising:
first transporting means for receiving the long dough mass and for transporting the same along a first conveying path, and means for dividing the long dough mass into a plurality of dough portions each having a predetermined length; and
second transporting means for receiving the said dough portions from said first transporting means and transporting the dough portions along a second conveying path, the said second conveying path being substantially orthogonal to the said first conveying path.

The present invention is characterised by joining means for receiving the said dough portions from said second means and for joining them to form a continuous dough strip, the said joining means including means for pressing the said dough portions to form a continuous dough strip of substantially constant thickness; wherein means are provided for controlling the supply rate of the said dough portions from said second transporting means to said joining means.

A continuous dough strip thus formed has a substantially constant width which corresponds to the divided lengths of each of the said dough portions.

Preferably the apparatus further comprises means for changing the level of the said first means.

In a preferred embodiment the said first transporting means includes a first conveying belt entrained on at least one roll having a rotary axis. The said dividing means may then include a rotary cutter located at the downstream end of the conveying belt and having a rotary axis substantially parallel to the rotary axis of the said roll, the cutter being arranged to rotate so that it alternately contacts and retracts from the conveying belt.

The said second transporting means may then include a second conveying belt, and wherein an imaginary line along the travelling direction of said second conveying belt is substantially orthogonal to an imaginary line along the travelling direction of said first conveying belt of said first transporting means.

A sensor may be disposed on the said second transporting means for detecting whether a said dough portion is located on the second transporting means.

Preferably the apparatus further comprises means for equalizing the thickness of an overlapping area between successive dough portions. This equalizing means may comprise a roll.

The apparatus may further comprise third transporting means for receiving the said continuous strip from the joining means and for transporting it to a following processing stage.

The said second transporting means may include a second dividing means for dividing the said dough portions into a plurality of smaller dough portions.

US-A-2687699 and EP-A-0005570 also both disclose a method of dividing a long dough mass into a plurality of dough portions each having a predetermined length and forming a continuous dough strip from said dough portions, such method comprising the steps of:
receiving the long dough mass, transporting the same along a first conveying path, and dividing the long dough mass into a plurality of dough portions each having a predetermined length; and
receiving the divided dough portions and transporting the same along a second conveying path which is substantially orthogonal to the first conveying path.

The present invention is characterised by receiving the transported dough portions and joining them to form a continuous dough strip while pressing the dough portions to form a continuous dough strip of substantially constant thickness; and controlling the supply rate of the dough portions on the second conveying path.

Two embodiments of the invention will now be described by way of example and with reference to the accompanying drawings, in which:-
Fig. 1 is a front view of an apparatus according to a first embodiment of the present invention;
Fig. 2 is a side view of a kneading device used in the embodiment of Fig. 1, together with a storage section of the apparatus;
Fig. 3 is a side view of the apparatus of Fig. 1; and
Fig. 4 is a partial side view of an apparatus according to a second embodiment of the invention, illustrating a second rotary cutter and a joining device.

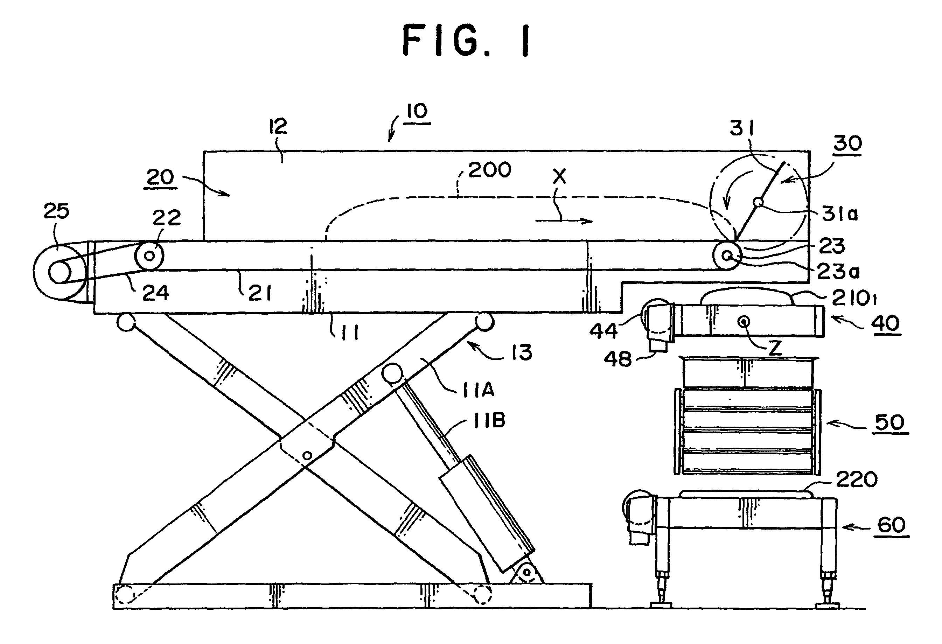

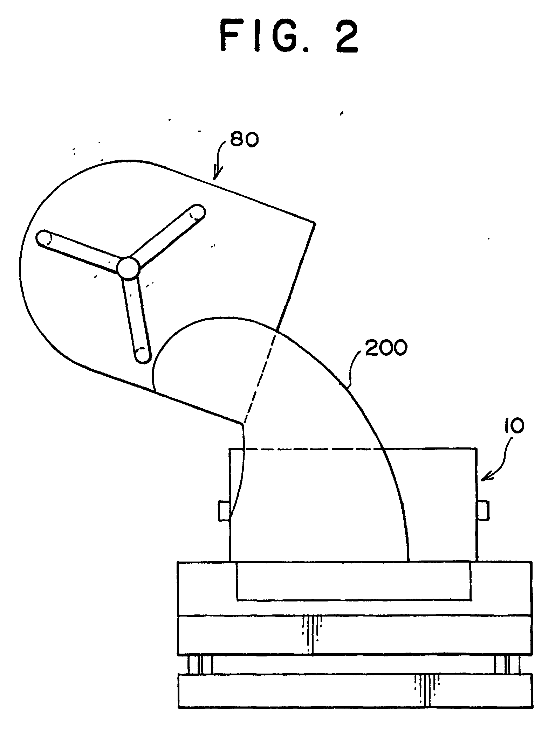

Fig. 1 shows a dough supplying and joining apparatus 100 which includes a storage section 10, a cutter unit 30, a dough joining device 50, and first, second, and third transporters 20, 40, and 60. The apparatus receives a long, kneaded dough mass 200 prepared by a conventional kneading device 80 shown in Fig. 2. The long dough mass 200 is suitable for producing breads, cakes, confectionery, or the like.

The storage section 10, which stores the long dough mass 200 received from the kneading device 80, is defined by a frame 11 and walls 12 which extend upwardly from the periphery of the frame. A lifting device 13, which is provided for elevating the storage section 10, comprises arms 11A slidably connected to each other and pivotally connected to the bottom of the frame 11, and a piston cylinder mechanism 11B which is operatively connected to one of the arms 11A.

Alternatively, the piston cylinder mechanism 11B of the lifting device 13 may be replaced by other means, as for example a mechanical jack or the like.

The first transporter 20, for supporting and transporting the dough 200 from the storage section 10, is a horizontal belt-type conveyor system which includes a first continuous belt 21 entrained around a driver roll 22 and an idler roll 23, mounted on the frame 11. A motor 25 is drivingly connected to the driver roll 22 through a transmission chain 24 so as to convey the dough 200 along a first transport direction designated by an arrow X.

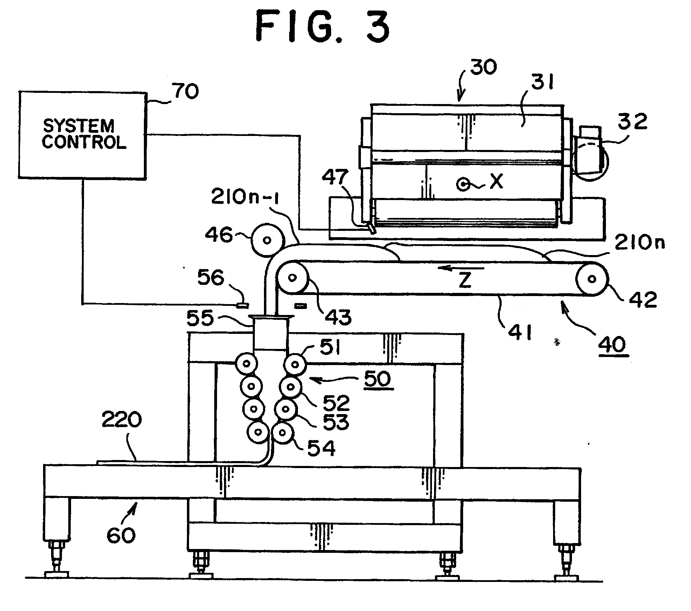

The cutter unit 30 is provided at the downstream end of the first transporter 20, in the first transport direction X. The cutter unit 30 has a rotary cutter 31 that rotates about an axis 31a and is driven by a motor 32 (Fig. 3). The axis 31a of the cutter is positioned substantially parallel to be rotary axis 23a of the idler roll 23 so that the cutter 31 is rotatable to continuously come into contact with, and to retract from, the first belt 21. In operation, an edge of a blade of the cutter 31 is rotated to contact the surface of the first belt 21 and thus to cut the long dough mass 200 which passes through the cutter unit 30 into a plurality of divided dough portions 210₁, 210₂, ..., 210ₙ₋ᵢ, 210ₙ, each of which has a predetermined length. The added numbers 1, 2, ... n-1, n denote sequential positive integers. However, in the drawings, only one portion 210, and only two portions 210₁, 210₂ are illustrated, in Figs. 1 and 2, respectively. These portions are made to in turn fall from the forward end of the conveyor 21 onto the second transporter 40.

The rotary cutter blade of the cutter unit 30 may be replaced by other types of blade, such as a blade movable up and down. In all cases, it is preferable that the length of the dough portion cut by the cutter unit 30 is variable, in order to produce various kinds of products.

As best seen in Fig. 3, the second transporter 40, which receives the dough portions 210₁, 210₂, ... 210ₙ₋ᵢ, and 210ₙ from the cutter unit 30, is provided under the cutter unit 30. The transporter 40 is also a horizontal belt-type conveyor system which is similar from a mechanical standpoint to the first transporter 20. The transporter 40 includes a second frame-supported continuous belt 41 entrained around a driver roll 42 and an idler roll 43. The driver roll 42 is driven by a motor 44 which is shown in Fig. 1 but not Fig. 3. The second belt 41, which is driven by the rotation of the motor 44, is arranged to feed the dough portions to the joining device 50.

The second transport direction (designated by the arrow Z) of the second belt 41 of the second transporter 40 is substantially orthogonal to the first direction X of the first belt 21 of the first transporter 20. When the long dough mass is being transported by the first belt 21 it moves in the direction X which is the direction of the length of the long dough mass. Then, having been divided into predetermined lengths in the direction X, the divided portions are moved in the direction Z, which extends in the direction of the width of the long dough mass 200. Thus the orientation of the long dough mass 200 in the direction X on the first conveyor 21 is changed through substantially a right angle to the direction Z on the second conveyor 41, since the two transport directions X and Z are orthogonal to each other.

The joining device 50 includes joining members 51, 52, 53, 54 for joining together the plurality of divided and separated dough pieces 210₁, 210₂ ..., 210ₙ₋₁, and 210ₙ. In this embodiment, the joining members comprise four pairs of opposed rolls arranged to define a V-shaped or tapered path therebetween and to rotate in such a direction so as to guide the dough pieces downward. Cylindrical rolls or polygonal rolls may be used as the joining members 51 to 54. Alternatively, a plurality of opposed belts arranged to define a V-shaped path therebetween may be used.

Located above the joining device 50 is a guide 55 for stabilizing the entry of the dough portions into the V-shaped slot defined by the joining device 50. Preferably, the interior walls of the guide 55 have a small roller or rollers for reducing friction between the dough and these walls.

Fig. 3 shows that the divided dough portions are gripped, pressed, vibrated, and fed to a bottom opening of the joining device 50 by the opposed rolls 51 to 54. This pressing of the dough portions between the rolls causes the adjacent dough portions to be joined to form a continuous dough strip 220 of a constant thickness and width. The strip 220 can keep a constant width over its full length since each of the supplied dough portions has a constant width. The width of the strip 220 can be easily changed as desired by varying the length of the dough portions cut by the cutter unit 30.

The third transporter 60, which receives the continuous dough strip 220 from the joining device 50 and transfers the strip to the following work station (not shown), is provided under the joining device 50.

With further reference to Figs. 1 and 2, the storage section 10 is vertically movable between an initial or lower position in which the piston cylinder mechanism 11B is contracted (see Fig. 2) and an elevated position in which the piston cylinder mechanism 11B is extended (see Fig. 1). The storage section 10 receives a long dough mass 200 at the lower position in Fig. 2 from the kneading device 80. As shown in Fig. 1, when the storage section 10 is at its higher position it can supply the divided dough to the second transporter 40. The level of the second belt 41 can be adjusted so that the dough portions fall at the correct position on the second belt to facilitate the conveying of the dough portions downstream. The level of the higher position of the storage section can preferably be adjusted so as to change the falling distance of the dough portions.

With further reference to Fig. 3, positioned in a space between the cutter unit 30 and the second transporter 40, in close proximity to the second belt 41, is a dough sensing device 47 connected to a system control 70. The dough portions that have been cut by the cutter unit 30 move downstream on the belt 41 to the dough sensing device 47, which senses the presence of dough in an area on the belt 41 and under the sensing device. The timing of the transfer of the dough portions from the cutter unit 30 to the second transporter 40 is controlled by signals generated by the sensing device 47. Thus, when the sensing device senses that a preceding dough portion has moved downstream on the belt 41 out of the specified area, it sends control signals to the first transporter 20 and cutter unit 30 through the control 70, so as to carry out the transfer of the next dough portion from the cutter unit to the second transporter 40.

Preferably, the extent of any overlap between the one dough portion and the next one may be controlled by adjusting the timing of the transfer of the dough portions from the cutter unit 30 to the second transporter 40, by means of the control 70.

Provided downstream of the second belt 41 is a pressure roll 46 for equalizing the thickness of overlapping adjacent dough portions. The roll 46 rotates in contact with the adjacent dough portions on the second belt 41 and brings the overlapping portions to a constant thickness. The adjacent dough portions can be preliminarily joined at their overlapping portions by the pressure of the roll 46. Such preliminarily joined overlapping portions will then be sufficiently fully joined by the joining device 50.

The apparatus may also include a sensor 56 located near the entrance of the joining device 50, as shown in Fig. 3. The sensor 56 detects the incoming dough portions and is connected to the system control 70. By means of the sensor 56 any oversupply or undersupply of the dough may be monitored, by detecting the dough remaining in the joining device 50 or a lack of incoming dough. The sensor 56 may generate signals corresponding to the detected information and transmit them to the system control 70. The control 70 may then use the signals to control the second belt 41 by varying the speed of the belt or by intermittently driving it, to supply the dough as required.

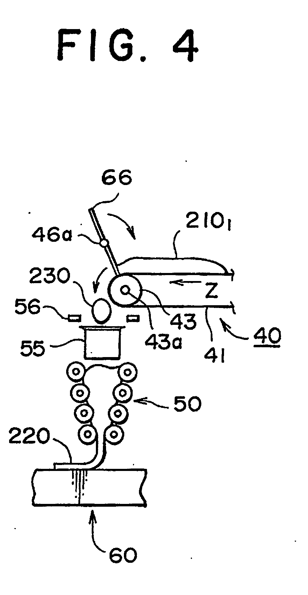

Fig. 4 shows a modified embodiment of the invention, in which each of the divided dough portions 210₁, 210₂, ..., 210ₙ₋₁, 210ₙ (only one such portion, 210, is shown in Fig. 4) of a predetermined length may be further divided into a plurality of small dough pieces 230 having a shorter length. For this purpose, this embodiment has a second rotary cutter 66 driven by a motor (not shown). The axis 46a of the cutter 66 is substantially parallel to the rotary axis 43a of the idler roll 43 so that the cutter 66 continuously contacts and retracts from the second belt 41. Thus the edge of a blade of the cutter 66 is rotated to contact at intervals the surface of the second belt 41, and thereby cut the dough portion 210. The cut dough pieces 230 drop into the joining device 50 and are joined with other dough pieces to form a continuous dough strip.

It will thus be seen that the present invention, at least in its preferred forms, provides a method and apparatus which is capable of providing a stable supply of continuous dough strips, each of which is formed by joining a plurality of dough portions end-to-end. The dough strip thereby produced has a constant width and thickness, and properly joined borders.

## Claims

1. Apparatus for dividing a long dough mass into a plurality of dough portions each having a predetermined length and forming a continuous dough strip from the said dough portions, such apparatus comprising:
first transporting means (20) for receiving the long dough mass (200) and for transporting the same along a first conveying path (21), and means (30) for dividing the long dough mass into a plurality of dough portions (210) each having a predetermined length; and
second transporting means (40) for receiving the said dough portions from said first transporting means and transporting the dough portions along a second conveying path (41), the said second conveying path being substantially orthogonal to the said first conveying path;
**characterised by** joining means (50) for receiving the said dough portions from said second transporting means and for joining them to form a continuous dough strip (220), the said joining means including means (51-54) for pressing the said dough portions to form a continuous dough strip of substantially constant thickness; wherein means (70) are provided for controlling the supply rate of the said dough portions (210) from said second transporting means (40) to said joining means (50).

2. Apparatus as claimed in claim 1, further comprising means (13) for changing the level of the said first means (20).

3. Apparatus as claimed in claim 1 or 2, wherein said first transporting means (20) includes a first conveying belt (21) entrained on at least one roll (23) having a rotary axis (23a).

4. Apparatus as claimed in claim 3, wherein said dividing means (30) includes a rotary cutter (31) located at the downstream and of said first conveying belt (21) and having an axis (31a) substantially parallel to the rotary axis (23a) of said roll (23), said rotary cutter being arranged to rotate so that it alternately comes in contact with and retracts from said first conveying belt.

5. Apparatus as claimed in claim 3 or 4, wherein said second transporting means (40) includes a second conveying belt (41), and wherein an imaginary line along the travelling direction (Z) of said second conveying belt is substantially orthogonal to an imaginary line along the travelling direction (X) of said first conveying belt (21) of said first transporting means (20).

6. Apparatus as claimed in any preceding claim, wherein a sensor (47) is disposed on said second transporting means (40) for detecting whether a said dough portion (210) is located on said second transporting means.

7. Apparatus as claimed in any preceding claim, further comprising means (46) for equalizing the thickness of an overlapping area between one said dough portion (210) and the next following dough portion.

8. Apparatus as claimed in claim 7, wherein said equalizing means (46) comprises a roll.

9. Apparatus as claimed in any preceding claim, further comprising third transporting means (60) for receiving said continuous dough strip (220) from said joining means (50) and for transporting the continuous dough strip to a following processing stage.

10. Apparatus as claimed in any preceding claim, wherein said second transporting means (40) includes second dividing means (66) for dividing the said dough portions (210) into a plurality of smaller dough portions (230)

11. A method of a dividing a long dough mass into a plurality of dough portions each having a predetermined length and forming a continuous dough strip from said dough portions, such method comprising the steps of:
receiving the long dough mass (200), transporting the same along a first conveying path (21), and dividing the long dough mass into a plurality of dough portions (210) each having a predetermined length; and
receiving the divided dough portions and transporting the same along a second conveying path (41) which is substantially orthogonal to the first conveying path;
**characterised by** receiving the transported dough portions and joining them to form a continuous dough strip (220) while pressing the dough portions to form a continuous dough strip of substantially constant thickness; and
controlling the supply rate of the dough portions (210) on the second conveying path (41).

12. A method as claimed in claim 11, further comprising a step of changing the level of the first conveying path (21).

13. A method as claimed in claim 11 or 12, further comprising a step of detecting whether a said dough portion (210) is located on said second conveying path (41).

14. A method as claimed in any of claims 11 to 13, further comprising a step of equalizing the thickness of an overlapping area between one said dough portion (210) and the next following dough portion.

15. A method as claimed in any of claims 11 to 14, further comprising a step of transporting the said continuous dough strip (220) to a following processing stage.

## Patentansprüche

1. Vorrichtung zum Teilen einer langgestreckten Teigmasse in eine Mehrzahl von Teigportionen, deren jede eine vorbestimmte Länge aufweist, und zum Formen eines kontinuierlichen Teigstreifens aus den genannten Teigportionen, wobei diese Vorrichtung umfaßt:
Eine erste Fördereinrichtung (20) für die Aufnahme der langgestreckten Teigmasse (200) und zum Transport derselben längs eines ersten Förderwegs (21), sowie eine Einrichtung (30) zum Teilen der langgestreckten Teigmasse in eine Mehrzahl von Teigportionen (210), deren jede eine vorbestimmte Länge aufweist, und
eine zweite Fördereinrichtung (40) zur Übernahme der Teigportionen von der ersten Fördereinrichtung und zum Fördern der Teigportionen längs eines zweiten Förderwegs (41), wobei der zweite Förderweg im wesentlichen im rechten Winkel zum ersten Förderweg verläuft,
**gekennzeichnet durch** eine Verbindungseinrichtung (50) für die Aufnahme der Teigportionen von der zweiten Fördereinrichtung und zum Verbinden derselben zwecks Formung eines kontinuierlichen Teigstreifens (220), wobei die Verbindungseinrichtung Elemente (51 bis 54) für das Drücken der Teigportionen besitzt, um einen kontinuierlichen Teigstreifen von im wesentlichen konstanter Dicke zu bilden, wobei eine Einrichtung (70) zur Steuerung der Zufuhrgeschwindigkeit der Teigportionen (210) von der zweiten Fördereinrichtung (40) zur Verbindungseinrichtung (50) vorgesehen ist.

2. Vorrichtung nach Anspruch 1, die zusätzlich eine Einrichtung zur Änderung des Niveaus der ersten Transporteinrichtung (20) umfaßt.

3. Vorrichtung nach Anspruch 1 oder 2, bei welcher die erste Fördereinrichtung (20) ein erstes Förderband (21) aufweist, das von mindestens einer Rolle (23) angetrieben wird, die eine Rotationsachse (23a) besitzt.

4. Vorrichtung nach Anspruch 3, bei welcher die Teilungseinrichtung (30) ein drehbares Messer (31) aufweist, das stromabwärts von dem ersten Förderband (21) angeordnet ist und eine Achse (31a) besitzt, die im wesentlichen parallel zu der Rotationsachse (23a) der Rolle (23) angeordnet ist, wobei das drehbare Messer so angeordnet ist, daß es sich derart dreht, daß es abwechselnd in Kontakt mit dem ersten Förderband kommt und sich von diesem wieder zurückzieht.

5. Vorrichtung nach Anspruch 3 oder 4, bei welcher die zweite Fördereinrichtung (40) ein zweites Förderband (41) aufweist und bei der eine imaginäre Linie längs der Förderrichtung (Z) des zweiten Förderbandes im wesentlichen rechtwinklig zu einer imaginären Linie längs der Förderrichtung (X) des ersten Förderbandes (21) der ersten Fördereinrichtung (20) verläuft.

6. Vorrichtung nach einem der vorhergehenden Ansprüche, bei welcher auf der zweiten Fördereinrichtung (40) ein Sensor (47) zur Feststellung vorgesehen ist, ob eine der genannten Teigportionen (210) auf der zweiten Fördereinrichtung angeordnet ist.

7. Vorrichtung nach einem der vorhergehenden Ansprüche, welche außerdem eine Einrichtung (46) zur Egalisierung der Dicke eines Überlappungsbereichs zwischen einer der Teigportionen (210) und der nächstfolgenden Teigportion aufweist.

8. Vorrichtung nach Anspruch 7, bei welcher die Egalisierungseinrichtung (46) eine Rolle aufweist.

9. Vorrichtung nach einem der vorhergehenden Ansprüche, welche außerdem eine dritte Fördereinrichtung (600) für die Übernahme des kontinuierlichen Teigstreifens (220) von der Verbindungseinrichtung (50) und für den Transport des kontinuierlichen Teigstreifens zu einer nachfolgenden Behandlungsstufe aufweist.

10. Vorrichtung nach einem der vorhergehenden Ansprüche, bei welcher die zweite Fördereinrichtung (40) eine zweite Teilungseinrichtung (66) zur Teilung der genannten Teigportionen (210) in eine Mehrzahl von kleineren Teigportionen (230) aufweist.

11. Verfahren zur Teilung einer langgestreckten Teigmasse in eine Mehrzahl von Teigportionen, deren jede eine vorbestimmte Länge besitzt, und zur Bildung eines kontinuierlichen Teigstreifens aus diesen Teigportionen, das die folgenden Schritte umfaßt:
Aufnehmen der langgestreckten Teigmasse (200), Fördern derselben längs eines ersten Förderwegs (21), Teilen der langgestreckten Teigmasse in eine Mehrzahl von Teigportionen (210), deren jede eine vorbestimmte Länge aufweist, und
Aufnehmen der abgeteilten Teigportionen und Fördern derselben längs eines zweiten Förderwegs (41), der im wesentlichen rechtwinklig zu dem ersten Förderweg angeordnet ist,
**gekennzeichnet durch** Aufnahme der geförderten Teigportionen und Verbinden derselben zur Bildung eines kontinuierlichen Teigstreifens (220), während die Teigportionen gepreßt werden, um einen kontinuierlichen Teigstreifen von im wesentlichen konstanter Dicke zu bilden, und
Steuern der Zuführgeschwindigkeit der Teigportionen (210) auf dem zweiten Förderweg (41).

12. Verfahren nach Anspruch 11, das außerdem einen Schritt der Niveauänderung des zweiten Förderwegs (21) aufweist.

13. Verfahren nach Anspruch 11 oder 12, enthaltend einen Schritt des Feststellens, ob eine Teigportion (210) auf dem zweiten Förderweg (41) angeordnet ist.

14. Verfahren nach einem der Ansprüche 11 bis 13, das ferner einen Schritt der Egalisierung der Dicke eines Überlappungsbereichs zwischen einer der genannten Teigportionen (210) und der nächstfolgenden Teigportion umfaßt.

15. Verfahren nach einem der Ansprüche 11 bis 14, das ferner einen Schritt des Förderns des genannten kontinuierlichen Teigstreifens (220) zu einer nachfolgenden Behandlungsstufe umfaßt.

## Revendications

1. Appareil pour diviser une longue masse de pâte en, une pluralité de portions de pâte ayant chacune une longueur prédéterminée et pour former une bande continue de pâte à partir desdites portions de pâte, cet appareil comportant :
un premier moyen de transport (20) destiné à recevoir la longue masse de pâte (200) et à la transporter le long d'un premier trajet de transport (21) et un moyen (30) destiné à diviser la longue masse de pâte en une pluralité de portions de pâte (210) ayant chacune une longueur prédéterminée ; et
un second moyen de transport (40) destiné à recevoir lesdites portions de pâte provenant dudit premier moyen de transport et à transporter les portions de pâte le long d'un second trajet (41) de transport, ledit second trajet de transport étant sensiblement orthogonal audit premier trajet de transport ;
**caractérisé par** un moyen (50) de réunion destiné à recevoir lesdites portions de pâte provenant dudit second moyen de transport et à les réunir pour former une bande de pâte continue (220), ledit moyen de réunion comprenant un moyen (51-54) destiné à presser lesdites portions de pâte pour former une bande de pâte continue d'épaisseur sensiblement constante ; dans lequel des moyens (70) sont prévus pour commander la vitesse d'amenée desdites portions de pâte (210) depuis ledit second moyen de transport (40) audit moyen de réunion (50).

2. Appareil selon la revendication 1, comportant en outre un moyen (13) destiné à faire varier le niveau dudit premier moyen (20).

3. Appareil selon la revendication 1 ou 2, dans lequel ledit premier moyen de transport (20) comprend une première bande transporteuse (21) entraînée sur au moins un rouleau (23) ayant un axe de rotation (23a).

4. Appareil selon la revendication 3, dans lequel ledit moyen de division (30) comprend un dispositif de coupe rotatif (31) placé à l'extrémité d'aval de ladite première bande de transport (21) et ayant un axe (31a) sensiblement parallèle à l'axe de rotation (23a) dudit rouleau (23), ledit dispositif de coupe rotatif étant agencé de façon à tourner pour alternativement venir en contact avec ladite première bande de transport et s'en rétracter.

5. Appareil selon la revendication 3 ou 4, dans lequel ledit second moyen de transport (40) comprend une seconde bande transporteuse (41) et dans lequel une ligne imaginaire suivant la direction de déplacement (Z) de ladite seconde bande transporteuse est sensiblement orthogonale à une ligne imaginaire suivant la direction de déplacement (X) de ladite première bande transporteuse (21) dudit premier moyen de transport (20).

6. Appareil selon l'une quelconque des revendications précédentes, dans lequel un capteur (47) est disposé sur ledit second moyen de transport (40) pour détecter si une portion de pâte (210) est placée sur ledit second moyen de transport.

7. Appareil selon l'une quelconque des revendications précédentes, comportant en outre un moyen (46) destiné à égaliser l'épaisseur d'une zone de chevauchement entre une portion de pâte (210) et la portion de pâte immédiatement suivante.

8. Appareil selon la revendication 7, dans lequel ledit moyen d'égalisation (46) comprend un rouleau.

9. Appareil selon l'une quelconque des revendications précédentes, comportant en outre un troisième moyen de transport (60) destiné à recevoir ladite bande de pâte continue (220) provenant dudit moyen de réunion (50) et à transporter la bande de pâte continue vers un stade de traitement suivant.

10. Appareil selon l'une quelconque des revendications précédentes, dans lequel ledit deuxième moyen de transport (40) comprend un second moyen de division (66) destiné à diviser lesdites portions de pâte (210) en une pluralité de portions de pâte plus petites (230).

11. Procédé pour diviser une longue masse de pâte en une pluralité de portions de pâte ayant chacune une longueur prédéterminée et pour former une bande de pâte continue à partir desdites portions de pâte, ce procédé comprenant les étapes qui consistent :
à recevoir la longue masse de pâte (200), à la transporter le long d'un premier trajet de transport (21) et à diviser la longue masse de pâte en une pluralité de portions de pâte (210) ayant chacune une longueur prédéterminée ; et
à recevoir les portions de pâte divisée et à les transporter le long d'un second trajet de transport (41) qui est sensiblement orthogonal au premier trajet de transport ;
**caractérisé par** la réception des portions de pâte transportées et leur réunion pour former une bande de pâte continue (220) tout en pressant les portions de pâte afin de former une bande de pâte continue d'épaisseur sensiblement constante ; et
la commande de la vitesse d'amenée des portions de pâte (210) sur le second trajet de transport (41).

12. Procédé selon la revendication 11, comprenant en outre une étape consistant à faire varier le niveau du premier trajet de transport (21).

13. Procédé selon la revendication 11 ou 12, comprenant en outre une étape consistant à détecter si une portion de pâte (210) est placée sur ledit second trajet de transport (41).

14. Procédé selon l'une quelconque des revendications 11 à 13, comprenant en outre une étape consistant à égaliser l'épaisseur d'une zone de chevauchement entre une portion de pâte (210) et la portion de pâte immédiatement suivante.

15. Procédé selon l'une quelconque des revendications 11 à 14, comprenant en outre une étape consistant à transporter ladite bande de pâte continue (220) vers un stade de traitement suivant.
